# EUROPEAN PATENT SPECIFICATION

(11) **EP 2 726 981 B1**
(45) Date of publication and mention of the grant of the patent: **13.06.2018**
(21) Application number: 12719947.9
(22) Date of filing: 19.04.2012
(51) Int. Cl.: G06F 9/44

(54) **HUMAN MACHINE INTERFACE UNIT FOR A COMMUNICATION DEVICE IN A VEHICLE AND I/O METHOD USING SAID HUMAN MACHINE INTERFACE UNIT**
VORRICHTUNG MIT SCHNITTSTELLE MENSCH-GERÄT FÜR EIN KOMMUNIKATIONSAPPARAT IN EINEM FAHRZEUG UND EINGABE/AUSGABE VERFAHREN, DAS DIESE EINHEIT MIT SCHNITTSTELLE MENSCH-GERÄT BENUTZT
DISPOSITIF AVEC UN INTERFACE HOMME-MACHINE POUR UN APPAREIL DE COMMUNICATION DANS UN VEHICULE ET PROCEDE D'ENTRÉE-SORTIE UTILISANT CE DISPOSITIF D'INTERFACE HOMME-MACHINE

(30) Priority: 20.04.2011 US 201113090861
(43) Date of publication of application: 07.05.2014
(73) Proprietor: Harman Becker Automotive Systems GmbH, 76307 Karlsbad (DE)
(72) Inventor: MICHAELIS, Oliver, San Diego California 92122 (US); HENKELMANN, Heiko, 73249 Wernau (DE)
(74) Representative: Kaufmann, Ursula Josefine
(86) International application number: PCT/EP2012/057210
(87) International publication number: WO 2012/143470

(56) References cited:
- WO-A1-2008/018700

## Description

### TECHNICAL FIELD

The present invention relates to a human machine interface unit for a communication device in a vehicle and an I/O method using said human machine interface unit.

### BACKGROUND ART

Modern vehicles are equipped with a complicated information and entertainment system comprising multiple data input and data output communication devices. Output communication devices represent data generated by an application or function of the device or vehicle to a driver or a passenger, and input communication devices receive data from a user. Output communication devices can comprise visual output units, such as signal lights, analogue or digital displays, head-up displays; audio output units, such as audio signal means, buzzers or loudspeakers for voice output; or mechanical output units, such as mechanical vibration units; and other haptic output units. Examples for input communication devices include keyboards, knobs, switches, jog dials, speech recognition input units, touch-sensitive displays or visual gesture recognition units. Besides, I/O communication devices can also comprise a combined input and output unit, such as a touchscreen unit or the like. An internal information and entertainment system of a vehicle can comprise a multimedia system, a music entertainment device, an on-board computer or a communication terminal of a vehicle.

Mobile I/O devices, such as smart phones, mobile computers, multimedia players etc. can interact with or can be integrated into the vehicle's information and entertainment system. Examples for applications or mobile devices may include a navigation system, telecommunication devices, such as a mobile phone, a smart phone, an internet device, a multimedia device, such as a MP3 player or a DVD player, a traffic information device, a toll payment device or a vehicle state information device.

Since vehicles are capable of representing more complex information and adopting more and more applications that originate from mobile and fixed internet devices, such as online search, SMS messaging, weather services, Twitter, etc., more complex user interface functions need to be integrated into the human machine interface (HMI) of each of said communication devices. The HMI defines the way in which information is output from or input into an application, such as an Email, an Internet browser, a Playlist editor, a vehicle state check etc., of such a communication device. Preferably, the HMI of complex mobile I/O devices, such as smart phones, mobile computers, portable navigation systems or mobile multimedia devices, have to be adapted to the constraints of the vehicle's information and entertainment system.

On the other hand, the rules for safe vehicle operation require that driver distraction should be minimized and well controlled. To this end, specific HMI methods that are convenient for a passenger are not necessarily applicable to the driver. Incoming messages, navigation data, traffic news or vehicle state information being relevant for the driver have to be prioritized depending on the driving condition and the information relevance. A passenger can be free to use a communication feature, such as an Email, or can watch a video clip while such information access should be suppressed for a driver during driving. Highly relevant information concerning driving safety, such as traffic news, vehicle failure warning or navigation information, should be clearly and directly represented to the driver and should not disturb the passenger. Such information should be represented adaptively in the form of audible, visual and/or mechanical information using different levels of intensity considering the driving situation and the information relevance.

For certain types of I/O devices and vehicles it is well known to define scenarios in which I/O devices should adapt to different driving situations and to the needs of the machine, the driver and the passenger. Such approaches are usually limited to a single HMI field, such as representing navigation information, offering a phone call or displaying vehicle state information, but fail to provide an open standard for embedding various I/O devices smoothly and comfortably into various types of HMI fields and various types of I/O devices. Such approaches are based on the detailed knowledge of available I/O devices and the functionality thereof. If information is to be output to a driver or to a passenger, a central unit selects a specific I/O device for information output and precisely selects the form of the output depending on the functionality of the I/O device. For example, if an application connected to a vehicle HMI system aims to receive a selection of an item from a list, the HMI system would select a touch-sensitive display to represent a specific table displaying a list and to receive a user selection by finger-tipping an item included in that table.

Adapting the HMI unit of different embedded vehicles and mobile communication devices to the aforementioned various requirements of application, of the driver and the passenger and to various driving conditions usually requires an in-depth understanding of the software and the hardware of the communication device and of the vehicle's infrastructure and usually leads to a complicated and costly adaption of each communication device to a specific vehicle information and entertainment system. Typically, a HMI unit of a mobile or embedded I/O device needs to be adapted to a specific vehicle information architecture which increases the integration costs and efforts. As a consequence, an adapted mobile communication device cannot be easily integrated into different vehicle environments. Safe driving, easy usability and high comfort of the HMI unit of each communication device cannot be guaranteed, especially in complex information and entertainment systems with multiple attached communication devices.

WO 2008/018700 A1 describes a human machine interface unit in a vehicle for telematics purposes, comprising a controller means, a memory means and an I/O interface means in communication with at least a physical I/O unit for physically communicating with a driver. The I/O interface means is in communication with a vehicle state unit for detecting a state of the car and with an environmental condition state unit for detecting an external environment state. The human machine interface provides a personalized telematics driver interface. Characteristic data of a driver has to be inputted in said telematics interface unit.

Therefore, it is desirable to simplify the adaption of HMI units of communication devices to a vehicle information and entertainment system architecture and to provide smooth and easy interaction between application, communication device and human user. To enable general application developers to understand a specific vehicle HMI paradigm and usage constraints in order to provide an application to the vehicle manufacturer (or directly to the end-user), a HMI unit and an I/O method are needed to abstract HMI functions and their behavior from the application, and hence to allow direct and consistent control over the HMI behavior to be defined by the vehicle manufacturer independently of the application development process.

### DISCLOSURE OF THE INVENTION

The invention is set out in independent claim to a human machine interface unit for a communication device, corresponding independent method claim 9, corresponding computer program code for executing on a computer the method of claim 9, and corresponding independent claim 17 to a computer program product. A first aspect of the invention relates to a human machine interface unit (HMI unit) for a communication device in a vehicle. The HMI unit comprises a controller means, a memory means, an API interface means in communication with a communication application means APP, and at least one I/O-interface means I/O-IM in communication with at least one physical I/O unit PHEₓ for physically communicating with an HMI endpoint user HEₓ. Said I/O interface means I/O-IM is also in communication with at least one vehicle state unit VS, a driving state unit DS and/or an environmental condition state unit EC. Said API interface means provides a standardized set of abstract input and output methods AMₓ for inputting data into and outputting data out of the communication application means APP. The controller means selects at least one physical I/O unit PHEₓ for physically inputting data from or outputting data to said physical I/O unit PHEₓ depending on a set of criteria stored in said memory means, comprising at least one type of a requested abstract I/O method AMₓ, an addressed
- HMI endpoint user HEₓ, a vehicle state VSₓ, a driving state DSₓ and/or an environmental
- condition ECₓ. Said HMI endpoint user HEₓ is at least a driver and one passenger,
- preferably a front seat passenger and a back seat passenger. The HMI unit may reside
- inside a mobile communication device, such as a mobile phone, a mobile computer, a navigation system, a multimedia player etc., or may reside in an internal vehicle communication device, such as an entertainment system. The controller means and said memory means can represent a microcomputer or processor system of a mobile communication device or a communication processor of a vehicle. The mobile device can communicate with a vehicle information and entertainment system by a wireless connection, e.g. Bluetooth, WLAN or the like, and can use an abstract level of communication according to a specific communication protocol based on a standardized set of abstract input and output methods AMₓ.

Alternatively, said communication can be based on a specific vehicle communication protocol, whereby the HMI unit resides in the mobile communication device and can convert abstract input and output methods AMₓ into I/O methods according to said specific communication protocol. Thus, applications running on a communication mobile device, such as Email, SMS, voice communication services, navigation applications or the like, can also have access to I/O devices hosted by said vehicle internal communication device.

The inventive HMI unit and the I/O method provided by said HMI unit for example suggest to request one or multiple physical I/O units, such as a touchscreen display, a display with keyboard, an ensemble of signal lights and selection switches, to provide a selection of an item from a list, but does not specify which device should represent the list and how the list should be represented and how the selection should be made. Each communication device independently decides how the list shall be presented and how the selection shall be made. This decision may depend on external conditions, such as driving conditions, source and flow of information etc. The HMI unit converts a specific I/O request into a device-independent request, transmits the request to one or multiple communication devices, whereby each communication device interprets the request independently and performs the request individually. There are neither structural nor functional dependencies between multimedia and communication system or the connected communication devices. Each communication device has to comply with a specific set of API instructions and has to interpret communication requests in conformity with device-specific constraints. In this way, various communication devices can be integrated in an information and entertainment system of a vehicle.

For selecting appropriate I/O unit information about addressed HMI endpoint user HEₓ, a transmitter or a receiver of data are important. For selecting an I/O unit as output unit data to be output can comprise information about an addressed HMI endpoint user (name of user, position of user in vehicle, output to all persons in vehicle), whereby regarding the user type it should at least be distinguished between driver and passenger. The visual output of data to a driver should be avoided during difficult driving conditions, such as a night drive or a drive in heavy traffic. Data to be output to back seat passengers can be represented via a display integrated in the head rest of a front seat, data to be output to a driver can be represented in the form of an audio speech output. The HMI endpoint user as a source of input data can be determined by a physical location of the I/O unit via which data is input, e.g. a keyboard at a passenger seat indicates a back seat passenger as a HMI endpoint user. Furthermore, the content of the input data or an ID of a mobile device can indicate a HMI endpoint user.

According to an advantageous embodiment, said abstract I/O method AMₓ can comprise a set of input methods in the form of a graphical selection input, a textual input, an audio input, a visual recognition input and/or a combination thereof; and a set of output methods can comprise an audio output, a visual output, a mechanical output and/or a combination thereof. Thus, an output of data by said application running inside a communication device can be made textually or graphically in the form of a visual output, in the form of a voice or a sound output or in the form of a mechanical output; and an input can be made either in the form of a mechanical input using a keyboard, switches, buttons, a joystick, a slider, a proximity sensor etc., an audio input in the form of speech recognition; or an optical input in the form of gesture recognition or the like. A plurality of different input and output methods provide adaptability of data input and - output according to various driving, vehicle and environmental situations and can advantageously be used for reducing the distraction level of the data input and the data output and for enhancing the driving safety and comfort for the user by selecting an optimized I/O unit with the highest possible comfort and the lowest possible distraction level.

According to another advantageous embodiment, said vehicle state VSₓ can be at least a vehicle parked, a vehicle locked, a vehicle moving and/or a vehicle stopped state. Furthermore, said driving state DSₓ can be at least a slow driving, a fast driving and/or a reverse driving state and/or said environmental condition state ECₓ can be at - least traffic density, visibility and/or noise level. External conditions, such as vehicle - state, driving state or environmental condition can be considered when selecting one or - multiple I/O units for inputting or outputting data. For instance during a vehicle park - condition, a driver is allowed to use a keyboard for inputting data, and output data is displayed in the form of textual data on a display. During driving, when the background noise is increased, the volume of a speech output can be raised, or data visually output at night can be represented in a dimmed mode.

According to another advantageous embodiment, said controller means can process a function ***F*** depending on at least one type of a requested abstract I/O method AMₓ, an addressed HMI endpoint user HEₓ, a vehicle state VSₓ, a driving state DSₓ and/or an environmental condition ECₓ for selecting at least one physical I/O unit PHEₓ and addressing said selected physical I/O unit PHEₓ via said I/O interface means I/O-IM (24) for inputting or outputting said data, whereby input data of a physical I/O unit PHEₓ is converted by said controller means into an abstract input method AMᵢₓ for communicating said data via said API interface means API to said communication application means APP; and an abstract output method AMₒₓ is converted by said controller means into an output request of data to be output by one or more selected physical I/O units PHEₓ.

To facilitate the integration of non-automotive applications into a vehicle environment, this embodiment introduces an abstraction function ***F*** that maps high-level HMI functions found on any mobile computing device or computer into vehicle-specific interface functions (the HMI abstraction layer). One key element of function ***F*** serves to provide a single set of application programming interfaces (APIs) to the developer community independently of different vehicle models and allows the specific implementation of the HMI, thus enabling rapid scaling of applications across vehicle types.

Additionally, the context in which ***F*** is executed is considered, e.g. whether the interaction was triggered by the driver or by a passenger. This causes the second key element of ***F*** to provide situational awareness within this framework and frees application developers from understanding all vehicle contexts and their limitations. One example is represented by an SMS handling messaging application. When an incoming message is received, the application would execute ***F*** to provide the message content. If the vehicle is moving at this time and if the recipient is the driver, the message may be rendered via text-to-speech. If the recipient is a passenger or if the vehicle is parked, the message may be rendered in the form of a text on an appropriate display within the vehicle. However, from the application perspective, a single API framework for access to generic input/output functionality abstracts the developer from the mechanics and HMI implementation of a specific vehicle model.

According to another advantageous embodiment and in line with the aforementioned embodiment, said HMI endpoint user HEₓ can be selected depending on a command of said communication application means APP and/or depending on a physical location of said physical I/O unit PHEₓ inside said vehicle, and/or said memory means comprising user preference data and/or priority data of said abstract input or output method AMₓ considered by said function ***F*** for selecting a physical I/O unit PHEₓ or an HMI endpoint user HEₓ. Priority data can be used to output data to a passenger or a driver with higher intensity, for instance with increased volume of a loudspeaker or increased brightness and contrast of a display. A high priority data output can overrule output restrictions and can be visually represented to a driver, via sound output and also via mechanical vibrations even in the case of a difficult driving situation. Data of high priority for instance can be an out-of-fuel warning, an emergency call or a vehicle failure warning.

In a further aspect of the invention a communication device is proposed, comprising a human machine interface unit according to one of the foregoing embodiments and being wire-based or wirelessly connected to at least one vehicle state unit VS in the form of a vehicle lock sensor, a vehicle park sensor, a vehicle stop sensor, a vehicle move sensor, and/or a window/roof open sensor; a driving state unit DS in the form of a speed sensor and/or a driving direction sensor; an environmental state unit EC in the form of a weather sensor, a traffic information system, a noise level sensor. The proposed communication device comprises an embodiment of an aforementioned HMI unit and provides an API with a set of abstract I/O methods for an application of said communication device or for an application of an external communication device such that an external application can use the physical I/O units of said communication device. According to another advantageous embodiment, said communication device can comprise a wire-based or wireless communication connection line connecting one or a plurality of external physical I/O units PHEₑₓ to said human machine interface unit for inputting data from or outputting data to said physical external I/O unit PHEₑₓ. A wireless communication connection line can be based on a Bluetooth connection, a WLAN connection or another near field radio-based, optical or acoustical data exchange method such that data can be input in or output to an external physical I/O unit.

According to another advantageous embodiment of said communication device, said physical I/O unit PHEₓ can comprise a set of visual output units in the form of a text display, a graphic display, a head-up display and/or a signal light; a set of audio output units in the form of a loudspeaker and/or a buzzer; a set of mechanical output units in the form of a shock vibrator, a vibrating seat and/or a vibrating steering wheel, and a set of mechanical input units in the form of a keyboard, a switch, a dial, a button, a joystick, a slider and/or a touchscreen; a set of audio input units in the form of a microphone; and/or a set of visual input units in the form of a camera. A camera designed as a visual input unit can use a gesture recognition method for inputting data or commands by distinct gestures of a user, e.g. movements of a user's hand or head.

A further aspect of the invention proposes a method for inputting and outputting data for a communication device in a vehicle comprising the following steps:
- receiving an abstract input or output method AMₓ for inputting data into and outputting data out of a communication application means APP from a communication application means APP of said communication device;
- selecting at least one physical I/O unit PHEₓ depending on at least one type of a requested abstract I/O method AMₓ, an addressed HMI endpoint user HEₓ, a vehicle state VSₓ, a driving state DSₓ and/or an environmental condition ECₓ;
- outputting data of said abstract I/O method AMₓ via said selected physical I/O unit PHEₓ and/or receiving input data of said physical I/O unit PHEₓ and converting said input data into an abstract input method AMᵢₓ for inputting said abstract input method AMᵢₓ into said communication application means APP. The inventive method can be executed by an embodiment of the aforementioned HMI unit and can be executed by a processor system, comprising a controller means and a memory means. The method provides a conversion between an abstract I/O method of an application, such as an Email system, SMS, Internet application, navigation application, bank transaction application or the like, and a selection and formation of an I/O request to a physical I/O unit such that an application is not required to be adapted to the I/O requirements of the vehicle. The conversion can consider a vehicle or a driving condition and also environmental conditions, such as noise level, weather conditions, traffic or surrounding information. The method allows easy adaption of different communication devices for optimal integration into a vehicle's communication system. A car manufacturer or service can adapt a HMI behavior to a vehicle type by configuring said method for all types of communication devices and applications.

According to an advantageous embodiment of said method, said input methods for inputting data can comprise a graphical selection input, a textual input, an audio input, a visual recognition input and/or a combination thereof, and said output methods for outputting data can comprise an audio output, a visual output, a mechanical output and/or a combination thereof. Thus, data can be visually output by an optical signal or on a display, such as a head-up display, can be superimposed on a display of an instrument board of the car, or can be output via sound, such as a spoken text or a buzzer sound, or in the form of a mechanical output, such as a vibration of a part of a user's seat, arm rest, steering wheel, gearshift-lever or joystick. Data can be input by mechanical selection, e.g. finger-tipping on a head-up display, a keyboard input, a switch, a button or a slider, or can be input via speech recognition or else optically via gesture recognition. The method selects an optimal way of representing data or to request an input of a user depending on the vehicle and driving situation and environmental conditions such that the human machine communication is non-distractive, clear, adequate and consistent. A driver may select an input device independently or the method may prompt a specific input and/or output method, e.g. a touch screen dialog. Thus the method may restrict input devices to one or specified devices, e.g. if a user has to choose from a list, an input device can be a touch screen and/or a dial wheel input device. During normal operation the method can allow all kind of input devices for inputting data, e.g. selecting an item from a list, but in a difficult driving condition an input device may be restricted to buttons and knops integrated in the steering wheel.

According to an advantageous embodiment of said method, said addressed HMI endpoint user HEₓ can be at least a driver, a passenger, preferably a front seat passenger and a back seat passenger; said vehicle state types VSₓ comprising at least a vehicle parked, a vehicle locked, a vehicle moving and/or a vehicle stopped state; said driving state types DSₓ comprising at least a slow driving, a fast driving and/or a reverse driving state; said environmental condition state types ECₓ comprising at least traffic density, visibility and/or noise level.

According to an advantageous embodiment of said method, a function F can select said physical I/O unit PHEₓ depending on at least one type of a requested abstract I/O method AMₓ, an addressed HMI endpoint user HEₓ, a vehicle state VSₓ, a driving state DSₓ and/or an environmental condition ECₓ, and can address said selected physical I/O unit PHEₓ for inputting or outputting said data, whereby input data of a physical I/O unit PHEₓ is converted into an abstract input method AMᵢₓ for inputting said data into said communication application means APP, and an abstract output method AMₒₓ is converted into an output request of data for outputting said data to one or more selected physical I/O units PHEₓ. The function ***F*** can be executed by a controller unit and can consider data, such as priority information data or user preference data, stored in a memory means of said HMI unit for deciding on a physical I/O unit.

According to an advantageous embodiment of said method, said HMI endpoint user HEₓ can be selected depending on a command of said communication application means APP and/or by a physical location of said physical I/O unit PHEₓ inside said vehicle, and/or said function F can consider user preference data and/or priority data of said abstract input or output method AMₓ for selecting a physical I/O unit PHEₓ or a HMI endpoint user HEₓ. A HMI endpoint user can be selected by analyzing a content or a receiver of data to be output or by a type of data (driver-related or passenger-related data). Furthermore, a location of an I/O unit can determine a HMI endpoint user for outputting requested data. User preference data can be considered for selecting a preferred way of inputting or outputting data, e.g. data output or a request input addressed to a child can be represented differently than an I/O action addressed to an adult. A user may prefer a textual or graphical representation of an I/O action or may prefer an audio I/O mode.
According to an advantageous embodiment of said method, said physical I/O unit PHEₓ can be selected among at least one internal physical I/O unit PHEᵢₓ of said communication device and/or an external internal I/O unit PHEₑₓ of said vehicle for inputting data from or outputting data to said I/O unit PHEₓ. The function ***F*** can decide if data can be output or input either by an internal or an external I/O unit and can determine a HMI endpoint user by identifying the location of an active I/O unit.

In another embodiment of the invention a computer program for execution in a data processing system of said human machine interface unit is proposed, comprising software code portions for performing a method according to anyone of the above mentioned embodiments when said program is run on a computer of said human machine interface unit. The computer program can be adapted to be downloaded to a human machine interface unit control unit or one of its components when run on a computer which is connected to the internet.

### BRIEF DESCRIPTION OF THE DRAWINGS

Hereinafter, the invention will be described in greater detail with reference to the attached drawings. These schematic drawings are used for illustration only and do not in any way limit the scope of the invention. In the drawings:
- **Fig. 1**: schematically illustrates a functional relation between HMI unit, application unit APP and physical I/O unit PHEₓ according to an embodiment of the invention;
- **Fig. 2**: schematically illustrates a structural relation between HMI unit, application unit APP and physical I/O unit PHEₓ according to an embodiment of the invention;
- **Fig. 3**: schematically illustrates a vehicle, comprising an internal and a mobile communication unit according to an embodiment of the invention;
- **Fig. 4**: schematically illustrates tables of various criteria for function F according to an embodiment of the invention;
- **Fig. 5**: a flow chart of processing an incoming message according to an embodiment of the invention.

### DETAILED DESCRIPTION OF PREFERRED EMBODIMENTS OF THE INVENTION

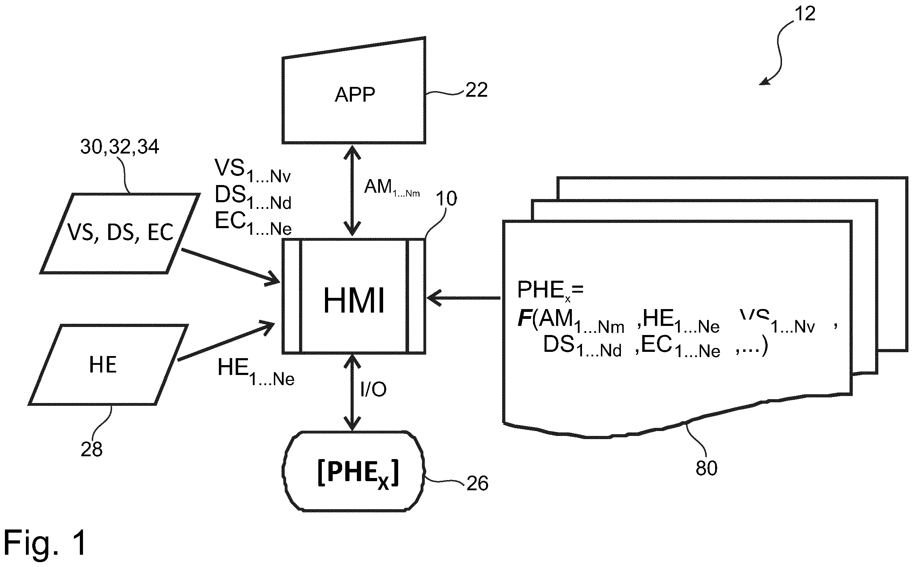

**Fig. 1** schematically illustrates a functional relation between the HMI unit 10, the communication application means APP 22 and the physical I/O unit PHEₓ 26 of a communication unit 12. The application means APP 22 communicates with the HMI unit 10 via a set of abstract I/O methods AM_{1...Nm.} HMI 10 selects a physical I/O unit PHEₓ 26 depending on one type of method AM_{1...Nm} and depending on the vehicle state VS_{1...Nv}, the driving state DS_{1...Nd}, the environmental condition EC_{1...Ne} and/or other conditions, such as user preferences. The HMI also considers a HMI endpoint user HEₓ to whom data is to be output or to whom input of data is requested. The driving state DS, the vehicle state VS and/or the environmental condition state EC are determined by sensor units 30, 32, 34 and are communicated to the HMI 10, preferably via a vehicle data bus system 74, such as a CAN field bus or the like. A function ***F*** 80 implemented in the HMI 10 selects an appropriate physical I/O unit PHEₓ 26 depending on AM_{1...Nm}, HE_{1..Ne}, VS_{1...Nv}, DS_{1..Nd}, and/or EC_{1..Ne} and/or other criteria.

The abstraction function ***F*** 80 provides the HMI 10 with a guideline by means of which general applications APP 22 in the vehicle 14 can have access and retrieve user input from a physical HMI I/O unit 26 in the I/O vehicle 14. The HMI 10 can communicate with the APP 22 by a set of abstract I/O methods AM_{1...Nm} comprising:
MENU_INPUT - Selection from a one-dimensional choice, e.g. list;
GRID_INPUT - Selection from a two-dimensional choice, e.g. table;
FREE_FORM_INPUT - General typed or spoken language;
CONTEXTUAL_INPUT - Discrete two-way input relevant for the current context;
INFORMATIONAL - Time/contextual-relevant output information, e.g. navigation, announcements;
AUDIO_GENERIC - General audio output, e.g. music, email, TTS (text2speech)...;
AUDIO_ALERT - Warning audio output that has priority over other outputs;
VISUAL_GENERIC - General output, e.g. map display, media library UI, playlist UI etc.;
VISUAL_ALERT - Warning display output that has priority over other outputs.

A contextual input can be any kind of two or more way input being relevant for the current context, e.g. up/down, run CW/CCW, increase/decrease, warmer/colder, zoom in/out, page fwd/back and similar commands.

Upon being triggered by an application APP 22, ***F*** 80 can consider the following HMI endpoint users HEₓ 28 as originators for its internal processing:
DRIVER - The driver 40 triggered an application action or the application 22 aims to represent information to the driver 40;
PASSENGER_FRONT - A passenger 42 (who can potentially directly distract the driver 40 by, e.g. sharing some physical HMI I/O units 26) triggered an application 22 or the application 22 wants to represent information to such passenger 42;
PASSENGER_REAR - A passenger 44, 46 with a completely separate set of HMI I/O units 26, i.e. without causing driver 40 distraction, triggered an application 22 or the application 22 aims to represent information to such a passenger 44, 46.

Additionally, upon being triggered by an application APP 22, function ***F*** 80 can consider the following vehicle states VS_{1...4} for its internal processing:
VEHICLE_LOCKED - The vehicle 14 is parked and no token authorizing the vehicle's operation is present;
VEHICLE_PARKED - The vehicle 14 is parked and the ignition is not enabled, but a token authorizing the vehicle's operation is present;
VEHICLE_STOPPED - The vehicle is stopped, but the ignition is enabled or the engine is running;
VEHICLE_MOVING - The vehicle is moving.

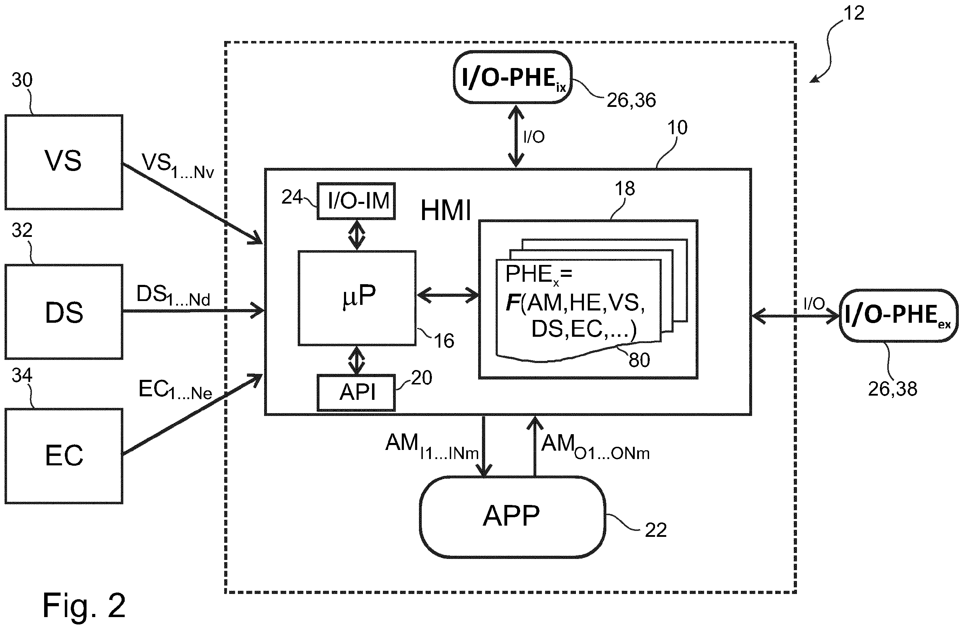

**Fig. 2** schematically illustrates a structural relation between the HMI unit 10, the application unit APP 22 and the internal physical I/O unit PHEₓ 36 of a communication unit 12 connected to a vehicle state unit VS 30, a driving state unit 32 and an environmental condition unit 34 of a vehicle 12 and also to a set of external physical I/O units PHEₓ 38 of an information and entertainment system of a vehicle 14. The HMI unit 10 comprises controller means 16, which can be a microcontroller or the like, and memory means 18 in data communication with said controller means 16. The processor system 16, 18 can process a function ***F*** 80, which converts abstract I/O methods AN_{1...Nm} of application means 22 to a unit-dependent I/O request of one or multiple selected physical I/O units 26 and vice versa. The HMI unit 10 further comprises an I/O-interface means I/O-IM 24 which provides an interface for communication with integrated and external I/O units PHEₓ 26. The I/O interface means 24 can provide a wireless or wire-based communication line with I/O units 26 and provides electrical connection between controller means 16 and I/O peripheral units 24. The HMI unit 10 further comprises an API interface means 20, which can be a piece of software providing a logical interface between controller means 16 and application means APP 22, typically a communication software running inside the communication unit 12. The APP 22 is a communication application and can be an internet browser, an Email or SMS-service, vehicle control software, navigation software, multimedia or audio entertainment software or the like. The communication unit 12 comprises one or a plurality of integrated physical I/O units PHEᵢₓ 36 which can be a keyboard, a display, a touchscreen display, a knob, a switch, a loudspeaker, a microphone, a buzzer etc. The communication device 12 is connected to a vehicle state unit VS 30, a driving state unit DS 32 and an environmental condition state unit 34 for receiving information about the vehicle status VS_{1---Nv}, e.g vehicle locked, vehicle stopped etc. state; driving state DS_{1...Nd}, e.g. fast driving, slow driving, reverse driving state; environmental condition EC_{1...Ne}, e.g. visibility, noise level, traffic condition, landscape condition (rural or urban region) etc. The communication between these sensor units 30, 32, 34 and controller means 16 of the HMI 10 can also be provided by I/O interface means 24. The communication unit 12 is also connected via I/O interface means 24 to one or multiple I/O units PHEₑₓ 38 of the vehicle 14 or of other mobile communication devices 12 by a wireless or wire-based communication line. The HMI 10 can select between any one of internal or external I/O units for outputting or inputting data of the HMI endpoint user 28.

Based on a request of the application APP 22 or the user 28, an I/O unit 26, and/or a vehicle state VS, a driving state DS or an environmental condition state EC, the function F 80 determines the appropriate interface function to access the set of physical I/O units 26 PHEₓ in the vehicle 14. Such physical I/O units 26 can comprise, but are not limited to:
- Text displays
- Graphical displays
- Head-up displays
- Dedicated indicators (e.g. indicator light, analogue dial)
- Illumination and color thereof
- Text-to-speech
- Voice recognition
- Switches
- Dials
- Buttons
- Joysticks
- Sliders
   ▪ Touch screens
   ▪ Handwriting recognition systems
- Gesture recognition systems - touch based and free gestures, also 3D gestures

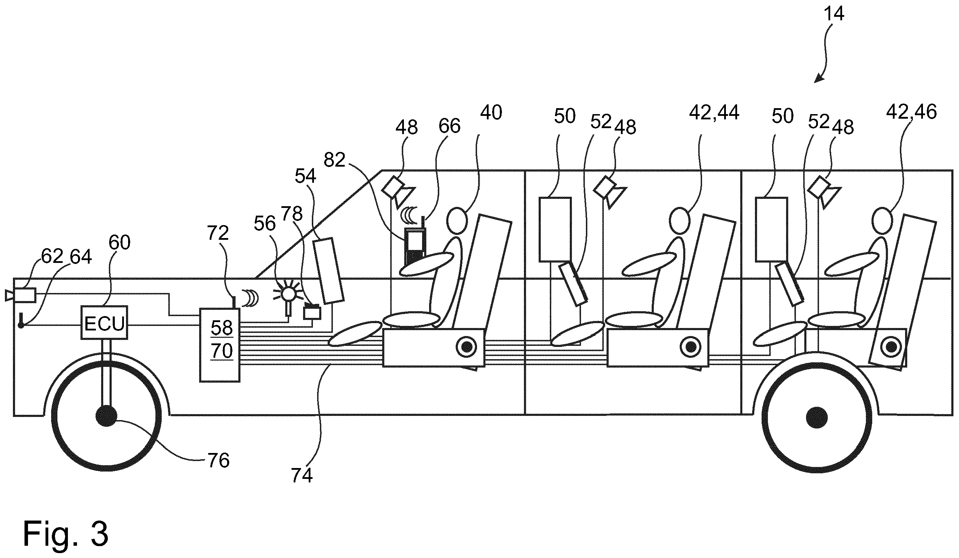

**Fig. 3** schematically illustrates a vehicle 14, comprising an internal 70 and a mobile communication unit 82. The internal communication unit 70 comprises a multimedia controller 58 for producing an audio and a video output and also comprises a navigation system for displaying routing information on a touch screen display 54 to a driver 40. The display 54 may be comprised of one or more instances, e.g. a console display and an instrument cluster display which act in the same way and can be used simultaneously. The communication unit 70 is connected by a communication connection line CAN 74 to loudspeakers 48 for a driver 40 and passengers 42. The back seat passenger 42 seats are equipped with keyboards 52 and displays 50 connected to the communication unit 70. Signal lights 56 and switches 78 are also connected to the communication unit 70 for indicating and controlling various vehicle functions, such as seat heating, air conditioning, lights etc. For communicating such commands to an electronic vehicle control unit 60, the communication unit 70 is connected to the ECU 60. The ECU 60 comprises multiple sensors, such as a temperature sensor 64 of an environmental condition state unit EC 34 and a driving state sensor 76 of a driving state unit DS 32. The communication unit 70 receives status information VS_{1---Nv}, DS_{1...Nd}, EC_{1...Ne} from the ECU 60. The communication unit 70 is also connected to a front camera 62 for line warning and collision detection, which can be visually output and/or output to the driver 40 in the form of a sound output depending on function ***F*** 80. The communication unit 70 further comprises a wireless communication antenna 72 for a Bluetooth connection with an antenna 66 of a mobile communication unit 82. Thus, an I/O request of an application 22 of said mobile communication unit 82 can be communicated to the vehicle's communication device 70 for an I/O action with one or several external I/O units 38 of the vehicle 14.

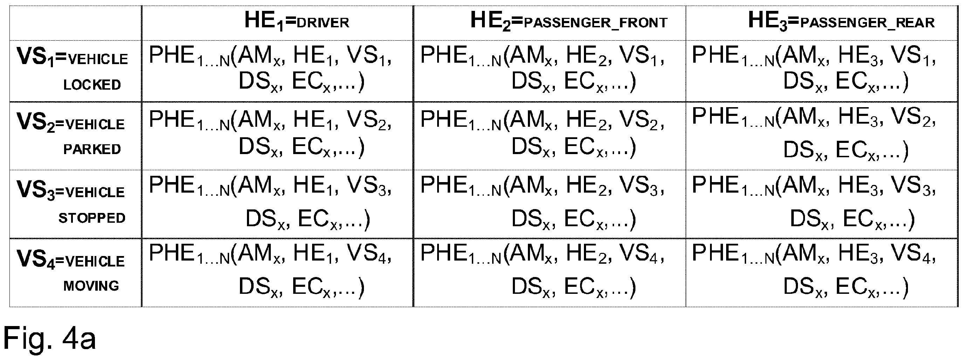

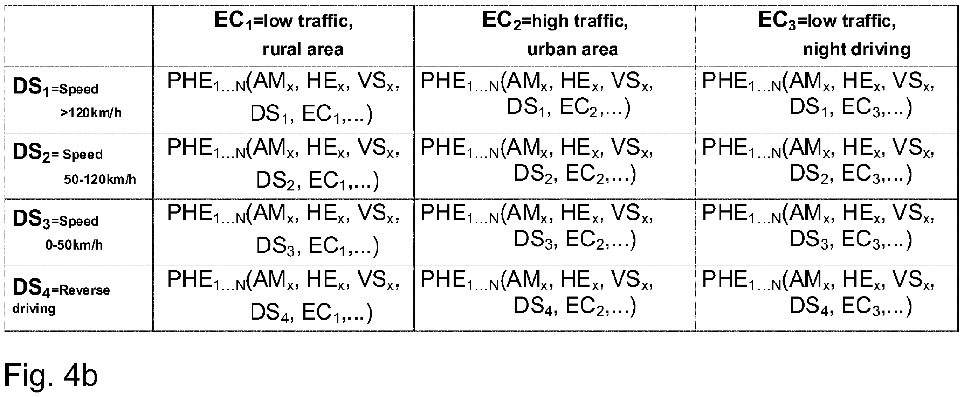

**Figs. 4a** and **4b** schematically illustrate tables of various criteria for function ***F*** 80 according to an embodiment of the invention. While the abstract I/O method AM_{1...N} is selected by the application 22 or by the user 28 interacting with the application 22 in the course of normal operation, the incorporation of the HMI endpoint user 28, the I/O unit 26 where data is input, and/or the vehicle state VS_{1...Nv}, the driving state DS_{1...Nd}, and/or the environmental condition EC_{1...Ne} to determine which PHEₓᵢ shall be used, i.e. the main body of function ***F*** 80, is defined as a policy by the vehicle manufacturer or by an other relevant entity with legitimate control over the vehicle behavior definition. All elements of function ***F*** 80 are implemented within a HMI abstraction layer, which is part of the computing platform within the vehicle 14. This enables a vehicle manufacturer to have no vehicle safety logic residing within the applications 22. In one embodiment of function ***F*** 80, such policy is implemented via the use of a two-dimensional or multidimensional lookup table for each action of AM_{1...N} as depicted in **Figs. 4a** and **4b****.** According to **Fig. 4a** the application 22 triggers an abstract method AMᵢ of the HMI abstraction layer. Based on the associated policy table of abstract method AMᵢ, the function ***F*** 80 performs a lookup using the current vehicle state VSₓ and the corresponding HMI endpoint 28 (input by driver, front seat passenger, back seat passenger) of the appropriate internal method to create an internal action handler, which determines one or multiple I/O units PHEₓ 26 for further communication use. **Fig. 4b** displays a selection of the I/O unit handler PHEₓ according to the driving state DS and the environmental condition EC. The function ***F*** 80 triggers the action handler associated function providing the implementation of the generic functionality described by AMᵢ within the actual HMI endpoint PHEₓ to be used. Any call-back or data return functionality implied by AMᵢ flows back to the application via the action handler (any HMI-specific data processing, such as voice recognition, is handled with the action handler internal functionality).

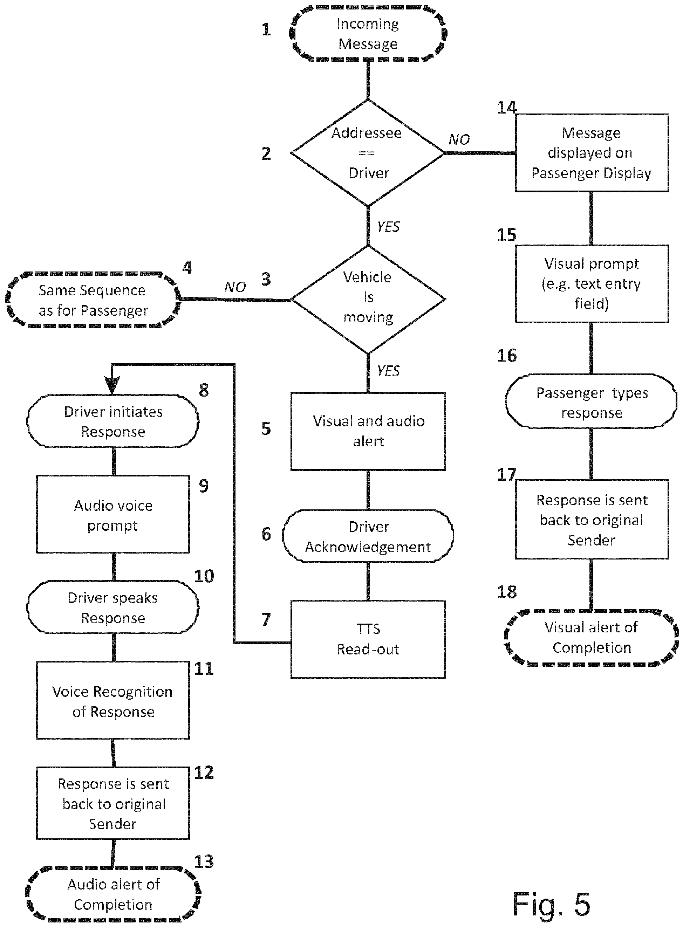

**Fig. 5** schematically illustrates the functional flow for a specific example application to further illustrate the mechanisms detailed above. The example application provides an instant messaging service with various devices depicted in **Fig. 3** serving as possible endpoints. Upon arrival of a message in [1] the application issues a generic output command of the message content to the function ***F.*** Upon said command, the addressee type is determined in [2]. In case of the driver the vehicle state is further checked for general driver attention level [3]. In the simple case of a parked or stopped vehicle the function ***F*** determines the use of the same HMI elements as for a passenger [4]. If the vehicle is moving the function ***F*** determines the appropriate alert for a priority message (in this case an instant message is configured to have a higher priority than e.g. an incoming electronic mail) to be a visual alert via elements 54 or 56 in **Fig. 3** and an audio alert via element 48 in **Fig. 3** [5]. Only upon an acknowledgement by the driver in [6], e.g. via a haptic element 78 in **Fig. 3** the function ***F*** determines text-to-speech rendering via element 48 in **Fig. 3** as the least distractive rendering method. In [8] the driver initiates a response request to the instant messaging application, e.g. via a haptic element 78 in **Fig. 3****.** Note that there may be a selection of currently enabled input devices the driver can choose from to initiate this action. Upon said request the function ***F*** determines voice recognition as the least distracting input method for a response to the instant messaging application and hence presents the driver with a voice prompt via element 48 in **Fig. 3** [9]. Following the prompt the driver dictates his response in [10], which is then rendered into text via a voice recognition engine in [11] and delivered back to the generic input method of the instant messaging application. The application then sends the response back to the original sender in [12] and issues a delivery acknowledgement output command to function ***F,*** which determines an audio alert as the least distractive rendering method. Note that for clarity of the example the driver attention state is only checked in the beginning, in other cases the function ***F*** may check said state more frequently. In the case of the message addressee type being a passenger the function ***F*** determines the local display 50 in **Fig. 3** to be the most efficient rendering method and displays the incoming message on said display in [14]. The function ***F*** then provides the passenger with a text entry field in [15]. Once the passenger has typed her response [16], the text is delivered back to the generic input method of the instant messaging application. The application then sends the response back to the original sender in [17] and issues a delivery acknowledgement output command to function ***F,*** which determines an visual confirmation on element 50 in **Fig. 3** to be the most efficient rendering method.

## Claims

1. Human machine interface, HMI unit (10) for a communication device (12) in a vehicle (14), comprising a controller means (16), a memory means (18), an API interface means (20) in communication with a communication application means APP (22) and at least one I/O interface means I/O-IM (24) in communication with at least one physical I/O unit PHEₓ (26, 36, 38) for physically communicating with an HMI endpoint user HEₓ (28, 40, 42, 44, 46), wherein said I/O interface means I/O-IM (24) being also in communication with at least one vehicle state unit VS (30), one driving state unit DS (32) and/or one environmental condition state unit EC (34), **characterized by** said API interface means API (20) providing a standardized set of abstract input and output methods AMₓ for inputting data into and outputting data out of the communication application means APP (22); and the controller means (16) selecting at least one physical I/O unit PHEx (26, 36,38) for physically inputting data from or outputting data to said physical I/O unit PHEₓ (26, 36,38) depending on a set of criteria stored in said memory means (18), comprising at least one type of a requested abstract I/O method AMₓ, an addressed HMI endpoint user HEₓ (28, 40, 42, 44, 46), a vehicle state VSₓ, a driving state DSₓ and/or an environmental condition ECₓ,
wherein the human machine interface unit (10) is configured to convert a specific I/O request into a device-independent request and to transmit the request to one or multiple communication devices (12), whereby each communication device (12) interprets the request independently and performs the request individually and
wherein for selecting an appropriate I/O unit PHEₓ (26, 36, 38) as output unit, data to be output comprises information about an addressed HMI endpoint user HEₓ (28, 40, 42, 44, 46), the information being one or more of name of user, position of user in vehicle, output to all persons in the vehicle, and whereby regarding a type of the HMI endpoint user HEₓ (28, 40, 42, 44, 46) it is at least distinguished between driver and passenger.

2. Unit (10) according to claim 1, **characterized by** said abstract I/O method AMₓ comprising a set of input methods in the form of a graphical selection input, a textual input, an audio input, a visual recognition input and/or a combination thereof, and comprising a set of output methods in the form of an audio output, a visual output, a mechanical output and/or a combination thereof.

3. Unit (10) according to claim 1, **characterized by** said addressed HMI endpoint user HEₓ (28, 40, 42, 44, 46) comprising at least one of a driver, a passenger, preferably a front seat passenger and/or a back seat passenger; said vehicle state VSₓ comprising at least a vehicle parked, a vehicle locked, a vehicle moving and/or a vehicle stopped state; said driving state DSₓ comprising at least a slow driving, a fast driving and/or a reverse driving state; said environmental condition state ECₓ comprising at least traffic density, visibility and/or noise level.

4. Unit (10) according to claim 1, **characterized by** said controller means (16) processing a function ***F*** (80) depending on at least one type of a requested abstract I/O method AMₓ, an addressed HMI endpoint user HEₓ (28, 40, 42, 44, 46), a vehicle state VSₓ, a driving state DSₓ and/or an environmental condition ECₓ for selecting at least one physical I/O unit PHEₓ (26, 36, 38), and addressing said selected physical I/O unit PHEₓ (26, 36,38) via said I/O interface means I/O-IM (24) for inputting or outputting said data, whereby input data of a physical I/O unit PHEₓ (26, 36,38) is converted by said controller means (16) into an abstract input method AMᵢₓ for communicating said data via said API interface means API (20) to said communication application means APP (22) and an abstract output method AMₒₓ is converted by said controller means (16) into an output request of data to be output by one or more selected physical I/O units PHEₓ (26, 36,38).

5. Unit (10) according to claim 4, **characterized by** said HMI endpoint user HEₓ (28, 40, 42, 44, 46) being selected depending on a command of said communication application means APP (22) and/or depending on a physical location of said physical I/O unit PHEₓ (26, 36,38) inside said vehicle (14), and/or said memory means (18) comprising user preference data and/or priority data of said abstract input or output method AMₓ considered by said function ***F*** (80) for selecting a physical I/O unit PHEₓ (26, 36,38) or an HMI endpoint user HEₓ (28, 40, 42, 44, 46).

6. Communication device (12) comprising a human machine interface unit (10) according to one of the preceding claims, being wire-based or wirelessly connected to at least one vehicle state unit VS (30) in the form of a vehicle lock sensor, a vehicle park sensor, a vehicle stop sensor, a vehicle move sensor, and/or a window/roof open sensor; a driving state unit DS (32) in the form of a speed sensor and/or a driving direction sensor; an environmental state unit EC (34) in the form of a weather sensor, a traffic information system or a noise level sensor.

7. Communication device (12) according to claim 6, **characterized by** a wire based or wireless communication connection line (74) connecting one or a plurality of external physical I/O units PHEₑₓ (38) with said human machine interface unit (10) for inputting data from or outputting data to said physical external I/O unit PHEₑₓ (38).

8. Communication device (12) according to claim 6, **characterized by** said physical I/O unit PHEₓ (26, 36,38) comprising a set of visual output units in the form of a text display, a graphic display (50), a head-up display and/or a signal light (56); a set of audio output units in the form of a loudspeaker (48) and/or a buzzer; a set of mechanical output units in the form of a shock vibrator, a vibrating seat and/or a vibrating steering wheel; and a set of mechanical input units in the form of a keyboard (52), a switch (78), a dial, a button, a joystick, a slider and/or a touchscreen (54); a set of audio input units in the form of a microphone; and/or a set of visual input units in the form of a camera (62).

9. Method for inputting and outputting data for a communication device (12) in a vehicle (14) comprising the following steps:
- receiving an abstract input or output method AMₓ for inputting data into and outputting data out of a communication application means APP (22) from a communication application means APP (22) of said communication device (10);
- selecting at least one physical I/O unit PHEₓ (26, 36,38) depending on at least one type of a requested abstract I/O method AMₓ, an addressed HMI endpoint user HEₓ (28, 40, 42, 44, 46), a vehicle state VSₓ, a driving state DSₓ and/or an environmental condition ECₓ;
- outputting data of said abstract I/O method AMₓ via said selected physical I/O unit PHEₓ (26, 36,38) and/or receiving input data of said physical I/O unit PHEₓ (26, 36,38) and correlating said input data with an abstract input method AMᵢₓ for inputting said abstract input method AMᵢₓ into said communication application means APP (22),
wherein the human machine interface unit (10) is configured to convert a specific I/O request into a device-independent request and to transmit the request to one or multiple communication devices (12), whereby each communication device (12) interprets the request independently and performs the request individually, and
wherein for selecting an appropriate I/O unit PHEₓ (26, 36, 38) as output unit, data to be output comprises information about an addressed HMI endpoint user HEₓ (28, 40, 42, 44, 46) the information being one or more of name of user, position of user in vehicle, output to all persons in the vehicle, and, whereby regarding a type of the HMI endpoint user HEₓ (28, 40, 42, 44, 46) it is at least distinguished between driver and passenger.

10. Method according to claim 9, **characterized by** said input method for inputting data comprising a graphical selection input, a textual input, an audio input, a visual recognition input and/or a combination thereof, and said output methods for outputting data comprising an audio output, a visual output, a mechanical output and/or a combination thereof.

11. Method according to claim 9, **characterized by** said addressed HMI endpoint user HEₓ being at least one of a driver (40), a passenger (42), preferably a front seat passenger and/or a back seat passenger (44, 46); said vehicle state VSₓ being at least a vehicle parked, a vehicle locked, a vehicle moving and/or a vehicle stopped state; said driving states DSₓ being at least a slow driving, a fast driving and/or a reverse driving state; said environmental condition state ECₓ being at least traffic density, visibility and/or noise level.

12. Method according to claim 9, **characterized by** a function ***F*** (80) selecting said physical I/O unit PHEₓ (26, 36,38) depending on at least one type of a requested abstract I/O method AMₓ, an addressed HMI endpoint user HEₓ (28, 40, 42, 44, 46), a vehicle state VSₓ, a driving state DSₓ and/or an environmental condition Ecx, and addressing said selected physical I/O unit PHEₓ (26, 36, 38) for inputting or outputting said data, whereby input data of a physical I/O unit PHEₓ (26, 36, 38) is correlated with an abstract input method AMᵢₓ for inputting said data into said communication application means APP (22); and an abstract output method AMₒₓ is converted into an output request of data for outputting said data to one or more selected physical I/O units PHEₓ (26, 36, 38).

13. Method according to claim 12, **characterized by** said HMI endpoint user HEₓ (28, 40, 42, 44, 46) being selected depending on a command of said communication application means APP (22) and/or by a physical location of said physical I/O unit PHEₓ (26, 36, 38) inside said vehicle (14), and/or said function ***F*** (80) considering user preference data and/or priority data of said abstract input or output method AMₓ for selecting a physical I/O unit PHEₓ (26, 36, 38) or an HMI endpoint user HEₓ (28, 40, 42, 44, 46).

14. Method according to claim 12, **characterized by** said physical I/O unit PHEₓ (26, 36,38) being selected among at least one internal physical I/O unit PHEᵢₓ (36) of said communication device (12) and/or one external internal I/O unit PHEₑₓ (38) of said vehicle (14) for inputting data from or outputting data to said I/O unit PHEₓ (26, 36,38).

15. Computer program comprising a computer program code adapted to perform a method or for use in a method according to claim 9 when said program is run on a programmable computer of a human machine interface unit (10) according to claim 1.

16. The computer program according to claim 15 adapted to be downloaded to a human machine interface unit control unit (10) or one of its components when run on a computer which is connected to the internet.

17. Computer program product stored on a computer readable medium, comprising a program code for use in a method according to claim 9.

## Patentansprüche

1. Mensch-Maschine-Schnittstellen(HMI)-Einheit (10) für eine Kommunikationsvorrichtung (12) in einem Fahrzeug (14), umfassend eine Steuereinrichtung (16), eine Speichereinrichtung (18), eine API-Schnittstelleneinrichtung (20) in Kommunikation mit einer Kommunikationsanwendungseinrichtung APP (22) und mindestens eine E/A-Schnittstelleneinrichtung I/O-IM (24) in Kommunikation mit mindestens einer physischen E/A-Einheit PHEₓ (26, 36, 38) zur physischen Kommunikation mit einem HMI-Endpunktbenutzer HEₓ (28, 40, 42, 44, 46), wobei die E/A-Schnittstelleneinrichtung I/O-IM (24) ebenfalls in Kommunikation mit mindestens einer Fahrzeugzustandseinheit VS (30), einer Fahrzustandseinheit DS (32) und/oder einer Umgebungsbedingungszustandseinheit EC (34) steht,
**dadurch gekennzeichnet, dass** die API-Schnittstelleneinrichtung API (20) einen standardisierten Satz von abstrakten Eingabe- und Ausgabeverfahren AMₓ zum Eingeben von Daten in die und Ausgeben von Daten aus der Kommunikationsanwendungseinrichtung APP (22) bereitstellt; und wobei die Steuereinrichtung (16) mindestens eine physische E/A-Einheit PHEₓ (26, 36, 38) zum physischen Eingeben von Daten von der oder Ausgeben von Daten an die physische/n E/A-Einheit PHEₓ (26, 36, 38) in Abhängigkeit von einem Satz von Kriterien, der in der Speichereinrichtung (18) gespeichert ist, auswählt, umfassend mindestens einen Typ eines angeforderten abstrakten E/A-Verfahrens AMₓ, einen adressierten HMI-Endpunktbenutzer HEₓ (28, 40, 42, 44, 46), einen Fahrzeugzustand VSₓ, einen Fahrzustand DSₓ und/oder eine Umgebungsbedingung ECₓ,
wobei die Mensch-Maschine-Schnittstelleneinheit (10) zum Umwandeln einer spezifischen E/A-Anforderung in eine vorrichtungsunabhängige Anforderung und zum Übertragen der Anforderung an eine oder mehrere Kommunikationsvorrichtungen (12) konfiguriert ist, wobei jede Kommunikationsvorrichtung (12) die Anforderung unabhängig auslegt und die Anforderung individuell durchführt, und
wobei zum Auswählen einer geeigneten E/A-Einheit PHEₓ (26, 36, 38) als Ausgabeeinheit auszugebende Daten Informationen über einen adressierten HMI-Endpunktbenutzer HEₓ (28, 40, 42, 44, 46) umfassen, wobei es sich bei den Informationen um eins oder mehrere des Namens des Benutzers, der Position des Benutzers im Fahrzeug handelt, die an alle Personen im Fahrzeug ausgegeben werden, und
wobei in Bezug auf einen Typ des HMI-Endpunktbenutzers HEₓ (28, 40, 42, 44, 46) mindestens zwischen Fahrer und Fahrgast unterschieden wird.

2. Einheit (10) nach Anspruch 1, **dadurch gekennzeichnet, dass** das abstrakte E/A-Verfahren AMₓ einen Satz von Eingabeverfahren in der Form einer grafischen Auswahleingabe, einer Texteingabe, einer Audioeingabe, einer visuellen Erkennungseingabe und/oder einer Kombination davon umfasst und einen Satz von Ausgabeverfahren in der Form einer Audioausgabe, einer visuellen Ausgabe, einer mechanischen Ausgabe und/oder einer Kombination davon umfasst.

3. Einheit (10) nach Anspruch 1, **dadurch gekennzeichnet, dass** der adressierte HMI-Endpunktbenutzer HEₓ (28, 40, 42, 44, 46) mindestens einen von einem Fahrer, einem Fahrgast, vorzugsweise ein Beifahrer und/oder ein auf einem Rücksitz sitzender Fahrgast, umfasst; der Fahrzeugzustand VSₓ mindestens einen Fahrzeug-geparkt-, einen Fahrzeug-verriegelt-, einen Fahrzeug-fährt- und/oder einen Fahrzeug-gestoppt-Zustand umfasst; der Fahrzustand DSₓ mindestens einen Langsamfahr-, einen Schnellfahr- und/oder einen Rückwärtsfahrzustand umfasst; der Umgebungsbedingungszustand ECₓ mindestens Verkehrsdichte, Sichtweite und/oder Geräuschpegel umfasst.

4. Einheit (10) nach Anspruch 1, **dadurch gekennzeichnet, dass** die Steuereinrichtung (16) eine Funktion **F** (80) in Abhängigkeit von mindestens einem Typ eines angeforderten abstrakten E/A-Verfahrens AMₓ, eines adressierten HMI-Endpunktbenutzers HEₓ (28, 40, 42, 44, 46), eines Fahrzeugzustands VSₓ, eines Fahrzustands DSₓ und/oder einer Umgebungsbedingung ECₓ zum Auswählen von mindestens einer physischen E/A-Einheit PHEₓ (26, 36, 38) verarbeitet und die ausgewählte physische E/A-Einheit PHEₓ (26, 36, 38) über die E/A-Schnittstelleneinrichtung E/A -IM (24) zum Eingeben oder Ausgeben der Daten adressiert, wobei Eingabedaten einer physischen E/A-Einheit PHEₓ (26, 36, 38) durch die Steuereinrichtung (16) in ein abstraktes Eingabeverfahren AMᵢₓ zum Kommunizieren der Daten über die API-Schnittstelleneinrichtung API (20) an die Kommunikationsanwendungseinrichtung APP (22) umgewandelt werden und ein abstraktes Ausgabeverfahren AMₒₓ durch die Steuereinrichtung (16) in eine Ausgabeanforderung von Daten umgewandelt wird, die durch eine oder mehrere ausgewählte physische E/A-Einheiten PHEₓ (26, 36, 38) ausgegeben werden sollen.

5. Einheit (10) nach Anspruch 4, **dadurch gekennzeichnet, dass** der HMI-Endpunktbenutzer HEₓ (28, 40, 42, 44, 46) in Abhängigkeit von einem Befehl der Kommunikationsanwendungseinrichtung APP (22) und/oder in Abhängigkeit von einer physischen Position der physischen E/A-Einheit PHEₓ (26, 36, 38) innerhalb des Fahrzeugs (14) ausgewählt wird und/oder die Speichereinrichtung (18) Benutzerpräferenzdaten und/oder Prioritätsdaten des abstrakten Eingabe- oder Ausgabeverfahrens AMₓ umfasst, die durch die Funktion **F** (80) zum Auswählen einer physischen E/A-Einheit PHEₓ (26, 36, 38) oder eines HMI-Endpunktbenutzers HEₓ (28, 40, 42, 44, 46) berücksichtigt werden.

6. Kommunikationsvorrichtung (12), umfassend eine Mensch-Maschine-Schnittstelleneinheit (10) nach einem der vorhergehenden Ansprüche, die drahtgebunden oder drahtlos mit mindestens einer Fahrzeugzustandseinheit VS (30) in der Form eines Fahrzeugverriegelungssensors, eines Fahrzeugparksensors, eines Fahrzeugstoppsensors, eines Fahrzeugbewegungssensors und/oder eines Fenster/Dach-offen-Sensors; einer Fahrzustandseinheit DS (32) in der Form eines Geschwindigkeitssensors und/oder eines Fahrrichtungssensors; einer Umgebungszustandseinheit EC (34) in der Form eines Wettersensors, eines Verkehrsinformationssystems oder eines Geräuschpegelsensors verbunden ist.

7. Kommunikationsvorrichtung (12) nach Anspruch 6, **dadurch gekennzeichnet, dass** eine drahtgebundene oder drahtlose Kommunikationsleitung (74) eine oder eine Vielzahl von externen physischen E/A-Einheiten PHEₑₓ (38) mit der Mensch-Maschine-Schnittstelleneinheit (10) zum Eingeben von Daten von der oder Ausgaben von Daten an die physische/n externe/n E/A-Einheit PHEₑₓ (38) verbindet.

8. Kommunikationsvorrichtung (12) nach Anspruch 6, **dadurch gekennzeichnet, dass** die physische E/A-Einheit PHEₓ (26, 36, 38) einen Satz von visuellen Ausgabeeinheiten in der Form einer Textanzeige, einer Grafikanzeige (50), einer Blickfeldanzeige und/oder eines Signallichts (56); einen Satz von Audioausgabeeinheiten in der Form eines Lautsprechers (48) und/oder eines Signaltongebers; einen Satz von mechanischen Ausgabeeinheiten in der Form eines Stoßvibrators, eines vibrierenden Sitzes und/oder eines vibrierenden Lenkrads; einen Satz von mechanischen Eingabeeinheiten in der Form einer Tastatur (52), eines Schalters (78), einer Wählscheibe, einer Taste, eines Joysticks, eins Schiebers und/oder eines Touchscreens (54); einen Satz von Audioeingabevorrichtungen in der Form eines Mikrofons und/oder einen Satz von visuellen Eingabeeinheiten in der Form einer Kamera (62) umfasst.

9. Verfahren zum Eingeben und Ausgeben von Daten für eine Kommunikationsvorrichtung (12) in einem Fahrzeug (14), das die folgenden Schritte umfasst:
- Empfangen eines abstrakten Eingabe- oder Ausgabeverfahrens AMₓ zum Eingeben von Daten in eine und Ausgaben von Daten aus einer Kommunikationsanwendungseinrichtung APP (22) von einer Kommunikationsanwendungseinrichtung APP (22) der Kommunikationsvorrichtung (10);
- Auswählen von mindestens einer physischen E/A-Einheit PHEₓ (26, 36, 38) in Abhängigkeit von mindestens einem Typ eines angeforderten abstrakten E/A-Verfahrens AMₓ, eines adressierten HMI-Endpunktbenutzers HEₓ (28, 40, 42, 44, 46), eines Fahrzeugzustands VSₓ, eines Fahrzustands DSₓ und/oder einer Umgebungsbedingung ECₓ;
- Ausgeben von Daten des abstrakten E/A-Verfahrens AMₓ über die ausgewählte physische E/A-Einheit PHEₓ (26, 36, 38) und/oder Empfangen von Eingabedaten der physischen E/A-Einheit PHEₓ (26, 36, 38) und Korrelieren der Eingabedaten mit einem abstrakten Eingabeverfahren AMᵢₓ zum Eingeben des abstrakten Eingabeverfahrens AMᵢₓ in die Kommunikationsanwendungseinrichtung APP (22),
wobei die Mensch-Maschine-Schnittstelleneinheit (10) zum Umwandeln einer spezifischen E/A-Anforderung in eine vorrichtungsunabhängige Anforderung und zum Übertragen der Anforderung an eine oder mehrere Kommunikationsvorrichtungen (12) konfiguriert ist, wobei jede Kommunikationsvorrichtung (12) die Anforderung unabhängig auslegt und die Anforderung individuell durchführt, und
wobei zum Auswählen einer geeigneten E/A-Einheit PHEₓ (26, 36, 38) als Ausgabeeinheit auszugebende Daten Informationen über einen adressierten HMI-Endpunktbenutzer HEₓ (28, 40, 42, 44, 46) umfassen, wobei es sich bei den Informationen um eins oder mehrere des Namens des Benutzers, der Position des Benutzers im Fahrzeug handelt, die an alle Personen im Fahrzeug ausgegeben werden, und
wobei in Bezug auf einen Typ des HMI-Endpunktbenutzers HEₓ (28, 40, 42, 44, 46) mindestens zwischen Fahrer und Fahrgast unterschieden wird.

10. Verfahren nach Anspruch 9, **dadurch gekennzeichnet, dass** das Eingabeverfahren zum Eingeben von Daten eine grafische Auswahleingabe, eine Texteingabe, eine Audioeingabe, eine visuelle Erkennungseingabe und/oder einer Kombination davon umfasst die Ausgabeverfahren zum Ausgeben von Daten eine Audioausgabe, eine visuelle Ausgabe, eine mechanische Ausgabe und/oder einer Kombination davon umfassen.

11. Verfahren nach Anspruch 9, **dadurch gekennzeichnet, dass** der adressierte HMI-Endpunktbenutzer HEₓ mindestens einer von einem Fahrer (40), einem Fahrgast (42), vorzugsweise ein Beifahrer und/oder ein auf einem Rücksitz sitzender Fahrgast (44, 46), ist; der Fahrzeugzustand VSₓ mindestens ein Fahrzeug-geparkt-, ein Fahrzeug-verriegelt-, ein Fahrzeug-fährt- und/oder ein Fahrzeug-gestoppt-Zustand ist; die Fahrzustände DSₓ mindestens ein Langsamfahr-, ein Schnellfahr- und/oder ein Rückwärtsfahrzustand sind; der Umgebungsbedingungszustand ECₓ mindestens Verkehrsdichte, Sichtweite und/oder Geräuschpegel ist.

12. Verfahren nach Anspruch 9, **gekennzeichnet durch** eine Funktion **F** (80), welche die physische E/A-Einheit PHEₓ(26, 36, 38) in Abhängigkeit von mindestens einem Typ eines angeforderten abstrakten E/A-Verfahrens AMₓ, eines adressierten HMI-Endpunktbenutzers HEₓ (28, 40, 42, 44, 46), eines Fahrzeugzustands VSₓ, eines Fahrzustands DSₓ und/oder einer Umgebungsbedingung auswählt Ecₓ und die ausgewählte physische E/A-Einheit PHEₓ (26, 36, 38) zum Eingeben oder Ausgeben der Daten adressiert, wobei Eingabedaten einer physischen E/A-Einheit PHEₓ (26, 36, 38) mit einem abstraktes Eingabeverfahren AMᵢₓ zum Eingeben der Daten in die Kommunikationsanwendungseinrichtung APP (22) korreliert werden und ein abstraktes Ausgabeverfahren AMₒₓ in eine Ausgabeanforderung von Daten zum Ausgaben der Daten an eine oder mehrere ausgewählte physische E/A-Einheiten PHEₓ (26, 36, 38) umgewandelt wird.

13. Verfahren nach Anspruch 12, **dadurch gekennzeichnet, dass** der HMI-Endpunktbenutzer HEₓ (28, 40, 42, 44, 46) in Abhängigkeit von einem Befehl der Kommunikationsanwendungseinrichtung APP (22) und/oder durch eine physische Position der physischen E/A-Einheit PHEₓ (26, 36, 38) innerhalb des Fahrzeugs (14) ausgewählt wird und/oder die Funktion F (80) Benutzerpräferenzdaten und/oder Prioritätsdaten des abstrakten Eingabe- oder Ausgabeverfahrens AMₓ zum Auswählen einer physischen E/A-Einheit PHEₓ (26, 36, 38) oder eines HMI-Endpunktbenutzers HEₓ (28, 40, 42, 44, 46) berücksichtigt.

14. Verfahren nach Anspruch 12, **dadurch gekennzeichnet, dass** die physische E/A-Einheit PHEₓ (26, 36, 38) aus mindestens einer internen physischen E/A-Einheit PHEᵢₓ (36) der Kommunikationsvorrichtung (12) und/oder einer externen E/A-Einheit PHEₑₓ (38) des Fahrzeugs (14) zum Eingeben von Daten von der oder Ausgeben von Daten an die E/A-Einheit PHEₓ (26, 36, 38) ausgewählt wird.

15. Computerprogrammprodukt, umfassend einen Computerprogrammcode, der dazu ausgelegt ist, ein Verfahren durchzuführen, oder zur Verwendung in einem Verfahren nach Anspruch 9, wenn das Programm auf einem programmierbaren Computer einer Mensch-Maschine-Schnittstelleneinheit (10) nach Anspruch 1 ausgeführt wird.

16. Computerprogramm nach Anspruch 15, das dazu ausgelegt ist, auf eine Mensch-Maschine-Schnittstelleneinheitssteuereinheit (10) oder eine ihrer Komponenten heruntergeladen zu werden, wenn es auf einem Computer ausgeführt wird, der mit dem Internet verbunden ist.

17. Computerprogrammprodukt, das auf einem computerlesbaren Medium gespeichert ist, umfassend einen Programmcode zur Verwendung in einem Verfahren nach Anspruch 9.

## Revendications

1. Unité d'interface homme-machine, HMI, (10) pour un dispositif de communication (12) dans un véhicule (14) comprenant un moyen de commande (16), un moyen de mémoire (18), un moyen d'interface API (20) en communication avec un moyen d'application de communication APP (22) et au moins un moyen d'interface E/S (24), MI-E/S, en communication avec au moins une unité E/S physique PHEₓ (26, 36, 38) pour communiquer physiquement avec un utilisateur de point d'extrémité HMI HEₓ (28, 40, 42, 44, 46), dans laquelle ledit moyen d'interface E/S (24), MI-E/S, est également en communication avec au moins une unité d'état de véhicule VS (30), une unité d'état de conduite DS (32) et/ou une unité d'état environnemental EC (34), **caractérisé par** ledit moyen d'interface API (20) fournissant un ensemble standardisé de procédés d'entrée et de sortie abstraits AMₓ pour entrer des données dans et émettre des données à partir de l'unité de moyen d'application de communication APP (22) ; et le moyen de commande (16) sélectionnant au moins une unité E/S physique PHEₓ (26, 36, 38) pour entrer physiquement des données à partir ou émettre des données vers ladite unité E/S physique PHEₓ (26, 36, 38) en fonction d'un ensemble de critères stockés dans ledit moyen de mémoire (18), comprenant au moins un type de procédé E/S abstrait requis AMₓ, un utilisateur de point d'extrémité HMI adressé HEₓ (28, 40, 42, 44, 46), un état de véhicule VSₓ, un état de conduite DSₓ et/ou un état environnemental ECₓ, dans laquelle l'unité d'interface homme-machine (10) est configurée pour convertir une requête E/S spécifique en une requête indépendante du dispositif et pour transmettre la requête à un ou plusieurs dispositifs de communication (12), moyennant quoi chaque dispositif de communication (12) interprète la requête indépendamment et exécute la requête individuellement et
dans laquelle pour sélectionner une unité E/S PHEₓ appropriée (26, 36, 38) comme unité de sortie, les données à délivrer comprennent des informations concernant un utilisateur de point d'extrémité HMI adressé HEₓ (28, 40, 42, 44, 46), les informations étant l'un ou plusieurs parmi le nom de l'utilisateur, la position de l'utilisateur dans le véhicule, la sortie pour toutes les personnes dans le véhicule, et moyennant quoi en ce qui concerne le type de l'utilisateur de point d'extrémité HMI HEₓ (28, 40, 42, 44, 46), il y a au moins une distinction entre conducteur et passager.

2. Unité (10) selon la revendication 1, **caractérisée par** ledit procédé E/S abstrait AMₓ comprenant un ensemble de procédés d'entrée sous la forme d'une entrée de sélection graphique, d'une entrée textuelle, d'une entrée audio, d'une entrée de reconnaissance visuelle et/ou d'une combinaison de celles-ci, et comprenant un ensemble de procédés de sortie sous la forme d'une sortie audio, d'une sortie visuelle, d'une sortie mécanique et/ou d'une combinaison de celles-ci.

3. Unité (10) selon la revendication 1, **caractérisée par** ledit utilisateur de point d'extrémité HMI adressé HEₓ (28, 40, 42, 44, 46) comprenant au moins l'un parmi un conducteur, un passager, de préférence un passager avant et/ou un passager arrière ; ledit état de véhicule VSₓ comprenant au moins un véhicule stationné, un véhicule verrouillé, un véhicule en mouvement et/ou un véhicule arrêté ; ledit état de conduite DSₓ comprenant au moins un état de conduite lent, un état de conduite rapide et/ou un état de marche arrière ; ledit état environnemental ECₓ comprenant au moins une densité de trafic, une visibilité et/ou un niveau de bruit.

4. Unité (10) selon la revendication 1, **caractérisée par** ledit moyen de commande (16) traitant une fonction F (80) en fonction d'au moins un type de procédé E/S abstrait requis AMₓ, un utilisateur de point d'extrémité HMI adressé HEₓ (28, 40, 42, 44, 46), un état de véhicule VSₓ, un état de conduite DSₓ et/ou un état environnemental ECₓ pour sélectionner au moins une unité E/S physique PHEₓ (26, 36, 38) et adresser ladite unité E/S physique sélectionnée PHEₓ (26, 36, 38) par l'intermédiaire dudit moyen d'interface E/S (24), MI-E/S, pour entrer ou émettre lesdites données, moyennant quoi les données d'entrée d'une unité E/S physique PHEₓ (26, 36, 38) sont converties par ledit moyen de commande (16) en un procédé d'entrée abstrait AMᵢₓ pour communiquer lesdites données par l'intermédiaire dudit moyen d'interface API (20) audit moyen d'application de communication APP (22) et un procédé de sortie abstrait AMₒₓ est converti par ledit moyen de commande (16) en une requête de sortie de données à émettre par une ou plusieurs unités E/S physiques sélectionnées PHEₓ (26, 36, 38).

5. Unité (10) selon la revendication 4, **caractérisée par** ledit utilisateur de point d'extrémité HMI HEₓ (28, 40, 42, 44, 46) étant sélectionné en fonction d'une commande dudit moyen d'application de communication APP (22) et/ou en fonction d'un emplacement physique de ladite unité E/S physique PHEₓ (26, 36, 38) à l'intérieur dudit véhicule (14), et/ou ledit moyen de mémoire (18) comprenant des données de préférence d'utilisateur et/ou des données de priorité dudit procédé d'entrée ou de sortie abstrait AMₓ prises en compte par ladite fonction *F* {80) pour sélectionner une unité E/S physique PHEₓ (26, 36, 38) ou un utilisateur de point d'extrémité HMI HEₓ (28, 40, 42, 44, 46) .

6. Dispositif de communication (12) comprenant une unité d'interface homme-machine (10) selon l'une quelconque des revendications précédentes, étant connecté par fil ou sans fil à au moins une unité d'état de véhicule VS (30) sous la forme d'un capteur de verrouillage de véhicule, d'un capteur de stationnement de véhicule, d'un capteur d'arrêt de véhicule, d'un capteur de déplacement de véhicule et/ou d'un capteur de fenêtre/toit ouvert ; une unité d'état de conduite DS (32) sous la forme d'un capteur de vitesse et/ou d'un capteur de direction de conduite ; une unité d'état environnemental EC (34) sous la forme d'un capteur météorologique, d'un système d'informations sur le trafic ou d'un capteur de niveau de bruit.

7. Dispositif de communication (12) selon la revendication 6, **caractérisé par** une ligne de connexion de communication par fil ou sans fil (74) connectant une ou une pluralité d'unités E/S physiques externes PHEₑₓ (38) à ladite unité d'interface homme-machine (10) pour entrer des données à partir de ou émettre des données vers ladite unité E/S externe physique PHEₑₓ (38).

8. Dispositif de communication (12) selon la revendication 6, **caractérisé par** ladite unité E/S physique PHEₓ (26, 36, 38) comprenant un ensemble d'unités de sortie visuelle sous la forme d'un affichage de texte, d'un affichage graphique (50), d'un affichage tête haute et/ou d'une lumière de signal (56) ; un ensemble d'unités de sortie audio sous la forme d'un haut-parleur (48) et/ou d'un buzzer ; un ensemble d'unités de sortie mécanique sous la forme d'un vibrateur de choc, d'un siège vibrant et/ou d'un volant vibrant ; et un ensemble d'unités d'entrée mécanique sous la forme d'un clavier (52), d'un commutateur (78), d'un cadran, d'un bouton, d'une manette, d'un curseur et/ou d'un écran tactile (54) ; un ensemble d'unités d'entrée audio sous la forme d'un microphone ; et/ou un ensemble d'unités d'entrée visuelle sous la forme d'une caméra (62).

9. Procédé d'entrée et de sortie de données pour un dispositif de communication (12) dans un véhicule (14) comprenant les étapes suivantes :
- la réception d'un procédé d'entrée ou de sortie abstrait AMₓ pour entrer des données dans et émettre des données à partir d'un moyen d'application de communication APP (22) depuis un moyen d'application de communication APP (22) dudit dispositif de communication (10) ;
- la sélection d'au moins une unité E/S physique PHEₓ (26, 36, 38) en fonction d'au moins un type d'un procédé E/S abstrait requis AMₓ, d'un utilisateur de point d'extrémité HMI adressé HEₓ (28, 40, 42, 44, 46), d'un état de véhicule VSₓ, d'un état de conduite DSₓ et/ou d'un état environnemental ECₓ ;
- l'émission de données dudit procédé E/S abstrait AMₓ par l'intermédiaire de ladite unité E/S physique sélectionnée PHEₓ (26, 36, 38) et/ou la réception de données d'entrée de ladite unité E/S physique PHEₓ (26, 36, 38) et la corrélation desdites données d'entrée avec un procédé d'entrée abstrait AMᵢₓ pour entrer ledit procédé d'entrée abstrait AMᵢₓ dans ledit moyen d'application de communication APP (22),
dans lequel l'unité d'interface homme-machine (10) est configurée pour convertir une requête E/S spécifique en une requête indépendante du dispositif et pour transmettre la requête à un ou plusieurs dispositifs de communication (12), moyennant quoi chaque dispositif de communication (12) interprète la requête indépendamment et exécute la requête individuellement, et
dans lequel pour sélectionner une unité E/S PHEₓ appropriée (26, 36, 38) comme unité de sortie, les données à émettre comprennent des informations concernant un utilisateur de point d'extrémité HMI adressé HEₓ (28, 40, 42, 44, 46), les informations étant l'un ou plusieurs parmi le nom de l'utilisateur, la position de l'utilisateur dans le véhicule, la sortie pour toutes les personnes dans le véhicule, et
moyennant quoi en ce qui concerne le type de l'utilisateur de point de d'extrémité HMI adressé HEₓ (28, 40, 42, 44, 46), il y a au moins une distinction entre conducteur et passager.

10. Procédé selon la revendication 9, **caractérisé par** ledit procédé d'entrée pour entrer des données comprenant une entrée de sélection graphique, une entrée textuelle, une entrée audio, une entrée de reconnaissance visuelle et/ou une combinaison de celles-ci, et lesdits procédés de sortie pour émettre des données comprenant une sortie audio, une sortie visuelle, une sortie mécanique et/ou une combinaison de celles-ci.

11. Procédé selon la revendication 9, **caractérisé par** ledit utilisateur de point d'extrémité HMI adressé HEₓ étant au moins l'un parmi un conducteur (40), un passager (42), de préférence un passager avant et/ou un passager arrière (44, 46) ; ledit état de véhicule VSₓ étant au moins un véhicule stationné, un véhicule verrouillé, un véhicule en mouvement et/ou un véhicule arrêté ; lesdits états de conduite DSₓ étant au moins un état de conduite lent, un état de conduite rapide et/ou un état de marche arrière ; ledit état environnemental ECₓ étant au moins la densité de trafic, la visibilité et/ou le niveau de bruit.

12. Procédé selon la revendication 9, **caractérisé par** une fonction F (80) sélectionnant ladite unité E/S physique PHEₓ (26, 36, 38) en fonction d'au moins un type de procédé E/S abstrait requis AMₓ, un utilisateur de point d'extrémité HMI adressé HEₓ (28, 40, 42, 44, 46), un état de véhicule VSₓ, un état de conduite DSₓ et/ou un état environnemental ECₓ, et l'adressage de ladite unité E/S physique sélectionnée PHEₓ (26, 36, 38) pour entrer ou émettre lesdites données, moyennant quoi les données d'entrée d'une unité E/S physique PHEₓ (26, 36, 38) sont corrélées avec un procédé d'entrée abstrait AMᵢₓ pour entrer lesdites données dans ledit moyen d'application de communication APP (22) ; et un procédé de sortie abstraite AMₒₓ est converti en une requête de sortie de données pour émettre lesdites données vers une ou plusieurs unités E/S physiques sélectionnées PHEₓ (26, 36, 38) .

13. Procédé selon la revendication 12, **caractérisé par** ledit utilisateur de point d'extrémité HMI HEₓ (28, 40, 42, 44, 46) étant sélectionné en fonction d'une commande dudit moyen d'application de communication APP (22) et/ou par un emplacement physique de ladite unité E/S physique PHEₓ (26, 36, 38) à l'intérieur dudit véhicule (14), et/ou ladite fonction F (80) prenant en compte des données de préférence d'utilisateur et/ou des données de priorité dudit procédé d'entrée ou de sortie abstrait AMₓ pour sélectionner une unité E/S physique PHEₓ (26, 36, 38) ou un utilisateur de point d'extrémité HMI HEₓ (28, 40, 42, 44, 46) .

14. Procédé selon la revendication 12, **caractérisé par** ladite unité E/S physique PHEₓ (26, 36, 38) étant sélectionnée parmi au moins une unité E/S physique interne PHEᵢₓ (36) dudit dispositif de communication (12) et/ou une unité E/S interne externe PHEₑₓ (38) dudit véhicule (14) pour entrer des données à partir de ou émettre des données vers ladite unité E/S PHEₓ (26, 36 38).

15. Programme informatique comprenant un code de programme informatique conçu pour exécuter un procédé ou destiné à être utilisé dans un procédé selon la revendication 9 lorsque ledit programme est exécuté sur un ordinateur programmable d'une unité d'interface homme-machine (10) selon la revendication 1.

16. Programme informatique selon la revendication 15 conçu pour être téléchargé sur une unité de commande d'unité d'interface homme-machine (10) ou l'un de ses composants lorsqu'il est exécuté sur un ordinateur qui est connecté à Internet.

17. Produit de programme informatique stocké sur un support lisible par ordinateur, comprenant un code de programme destiné à être utilisé dans un procédé selon la revendication 9.
